## Europäisches Patentamt
## European Patent Office
## Office européen des brevets

(19)

(11) Veröffentlichungsnummer: **0 064 096**
**B1**

(12)

# EUROPÄISCHE PATENTSCHRIFT

(45) Veröffentlichungstag der Patentschrift:
**15.01.86**

(51) Int. Cl.⁴: **G 02 B 6/36**

(21) Anmeldenummer: **81109145.3**

(22) Anmeldetag: **28.10.81**

(54) **Verfahren zum paarweisen Verbinden einer Vielzahl von Lichtwellenleitern.**

(30) Priorität: **30.04.81 DE 3117263**

(43) Veröffentlichungstag der Anmeldung:
**10.11.82 Patentblatt 82/45**

(45) Bekanntmachung des Hinweises auf die Patenterteilung:
**15.01.86 Patentblatt 86/3**

(84) Benannte Vertragsstaaten:
**AT BE CH DE FR GB IT LI NL SE**

(56) Entgegenhaltungen:
**EP-A-0 024 989**
**DE-A-2 856 770**
**DE-B-2 902 089**
**US-A-4 186 997**

(73) Patentinhaber: **Siemens Aktiengesellschaft, Berlin und München Wittelsbacherplatz 2, D-8000 München 2 (DE)**

(72) Erfinder: **Odemar, Norbert, Ing. grad., Hofbrunnstrasse 9, D-8000 München 71 (DE)**

EP 0 064 096 B1

## Beschreibung

Die Erfindung betrifft ein Verfahren zum paarweisen Verbinden einer Vielzahl von Lichtwellenleitern, die in Parallelanordnung auf einem Grundkörper angeordnet werden, der quer zum Verlauf der darauf angeordneten Lichtwellenleiter unter Bildung zweier Trägerkörper durchgetrennt wird, wobei die Lichtwellenleiter an ihren in der Trennstelle liegenden Stirnflächen poliert werden.

Für Verbindungen von einer Vielzahl von Lichtwellenleitern werden oft Träger mit Führungsnuten für die einzelnen Lichtwellenleiter verwendet, wie dies zum Beispiel der DE-AS 29 02 089 beschrieben ist. Hier werden die parallel verlaufenden Nuten in die Oberfläche eines Trägerkörpers eingebracht, wobei das Herstellen wegen der hohen Genauigkeit recht aufwendig und kostspielig sein kann. Dabei ist ein Nachteil auch darin zu sehen, daß bei unterschiedlichen Durchmessern der Lichtwellenleiter die Höhenlage in der Nut sehr variieren kann. Auf diese Weise ergibt sich unter Umständen beim Aneinanderkoppeln ein erheblicher Versatz der beiden zu verbindenden Lichtwellenleiter.

In der DE-OS 28 56 770 wird ein Verfahren zur Herstellung von Lichtwellenleiter-Kopplern beschrieben, bei dem von einer parallelen Lichtwellenleiter-Struktur ausgegangen wird, bei der auf einem ebenen Trägerkörper eine Vielzahl von parallelen Lichtwellenleitern befestigt ist. Diese parallele Lichtwellenleiter-Struktur wird zerlegt, so daß Kleinteile mit einem oder mehreren Lichtwellenleitern entstehen, die quer durchgetrennt worden sind. Solche Trennteile werden nun zum Beispiel unter definiertem Versatz wieder zusammengefügt, so daß auf diese Weise Abzweigkoppler gebildet werden können. Ohne Versatz sind normale Steckverbindungen möglich. Diese Steckeinheiten sind dann möglich, wenn ein zunächst durchgehendes Kabel getrennt und dann wieder verbunden werden soll. Benötigt man jedoch eine Verbindung von Lichtwellenleitern aus verschiedenen Kabeln bzw. Gruppen, das heißt wenn nicht ein durchgehendes Kabel, sondern nur Kabelenden zur Herstellung der Steckverbindungen zur Verfügung stehen, kann das beschriebene System nicht verwendet werden. Dies ergibt sich immer dann, wenn in verlegten Kabelanlagen an den Enden der ein- bzw. abgeführten Kabel steckbare Elemente angebracht werden müssen.

Es ergab sich nun für vorliegende Erfindung die Aufgabe, ein Verfahren zum paarweisen Verbinden einer Vielzahl von Lichtwellenleitern so zu gestalten, daß Steckverbindungen von Lichtwellenleitern aus verschiedenen Gruppen bzw. Kabeln in relativ einfacher Weise am Montageort der Kabelanlagen angebracht werden können. Die gestellte Aufgabe wird nun mit Hilfe eines Verfahrens zum Verbinden der eingangs beschriebenen Art dadurch gelöst, daß die Vielzahl der Lichtwellenleiter aus mindestens zwei verschiedenen zu verbindenden Gruppen stammen und abwechselnd parallel nebeneinanderliegend auf dem Grundkörper angeordnet werden, so daß nach der Trennung des Grundkörpers auf jedem Trägerkörper jeweils ein Lichtwellenleiter der einen Gruppe mit einem Endabschnitt eines Lichtwellenleiters der zweiten Gruppe abwechselt, daß weiterhin die Parallelanordnung der Lichtwellenleiter des einen Trägerkörpers quer zum Parallelverlauf der Lichtwellenleiter um den Durchmesser eines Lichtwellenleiters gegenüber der Parallelanordnung der Lichtwellenleiter des anderen Trägerkörpers durch ein Distanzstück versetzt wird und daß beide Trägerkörper entlang einer Bezugslinie eines gemeinsamen Führungskörpers auf Stoß ihrer Stirnflächen gebracht werden.

Vorteile ergeben sich nun bei der Erfindung dadurch, daß die Führungsrillen für die einzelnen Lichtwellenleiter entfallen, das heißt man benötigt nurmehr eine eben polierte Fläche und eine entsprechende Anschlagskante. Beide müssen parallel bzw. im rechten Winkel zu den Anschlagflächen des Grundkörpers, auf dem die Lichtwellenleiter angeordnet werden, liegen. Dieser Grundkörper wird nicht wie bei den vorherigen Techniken bereits im Werk getrennt, sondern erst nach der Montage am Einsatzort. Wie bereits erwähnt, ergeben sich gegenüber Verbindungsanordnungen mit V-Nuten dadurch Vorteile, daß durch verschiedene Durchmesser von Lichtwellenleitern der Höhenversatz minimal wird. Eine Summenbildung der Durchmessertoleranzen in Querrichtung tritt auch nicht in Erscheinung, weil jeder Lichtwellenleiter jeweils nur um die Größe eines Durchmessers zur Nachbarader verschoben wird. Voraussetzung ist jedoch, daß die Lichtwellenleiter praktisch lückenlos aneinander liegen. Die einzelnen Lichtwellenleiter werden nun abwechselnd von beiden Gruppen her aneinandergefügt, verklebt, zusammengespannt oder in anderer Weise eingebettet bzw. vergossen. Das Zusammenspannen erfolgt durch eine geeignete Abdeckung, durch welche die Lichtwellenleiter in allen Richtungen fixiert werden. Nach dieser Fixierung erfolgt die Trennung des Grundkörpers quer zur Richtung der eingelegten Lichtwellenleiter. Bei Verwendung eines Klebers wird die Trennung des Grundkörpers erst nach der Aushärtung des Klebers vorgenommen. Dadurch entstehen jeweils zwischen den einzelnen Lichtwellenleitern Endabschnitte, die sich nach dem Trennen und Querversetzen um den Durchmesser eines Lichtwellenleiters gegenüberliegen. Dies sind gewissermaßen Blindstücke, über die keine Informationen übertragen werden. Dadurch wird die Nebensprechdämpfung der Informationen tragenden Lichtwellenleiter verbessert, da diese jeweils im Abstand,der dem Durchmesser eines Endabschnittes entspricht, angeordnet sind. Eine derartige Anordnung eignet sich zum Beispiel besonders gut für Lichtwellenleiter, die ohne Beschichtung einen Durchmesser von 125 μm und

mit Lacküberzug einen Durchmesser von 250 µm aufweisen. Dadurch, daß der Durchmesser über dem Lack doppelt so groß ist als der Durchmesser des blanken Lichtwellenleiters, ist keine besondere Führung durch "Kämme" oder dergleichen mehr nötig. Beim abwechselnden Ineinanderfügen der Lichtwellenleiter von beiden Seiten her, ergibt sich somit ein lückenloses Aneinanderliegen der Lichtwellenleiter. Zur Befestigung ist es nur mehr nötig, einen Schlitz von 250 µm Schlitzbreite vorzusehen, in den die beschichteten Lichtwellenleiter eingeklemmt werden. Zwei parallele Lichtwellenleiter-Enden bilden somit einen Spalt von 125 µm in den der entlackte Lichtwellenleiter der Gegenrichtung eingefügt werden kann. Auf diese Weise können die ankommenden und abgehenden Lichtwellenleiter abwechselnd angeordnet werden. Nach dem Auflegen der Lichtwellenleiter-Enden in der beschriebenen Art werden die entlackten Lichtwellenleiter zum Beispiel mit Hilfe eines dünnen Metallstreifens von etwa 100 µm Dicke gegen die Anschlagskante des Grundkörpers gedrückt, wobei die aneinandergereihten, parallel liegenden Lichtwellenleiter mit einer Abdeckung fixiert sind. Diese Abdeckung kann zum Beispiel einige Polsterstreifen quer zur Faserrichtung tragen, so daß die Lichtwellenleiter federnd auf die polierte Fläche gedrückt werden. Wird die polierte Fläche ebenfalls mit einer dünnen, gleichmäßigen, etwas elastischen Schicht versehen, können Durchmessertoleranzen der Lichtwellenleiter ausgeglichen werden, so daß ein Höhenversatz noch verringert wird. Wenn nun die Lichtwellenleiter lückenlos aneinanderliegen, wird der Spalt zwischen polierter Fläche und Abdeckung mit Kleber ausgefüllt und ausgehärtet. Wie bereits erläutert, ist auch ein mechanisches Einspannen der Lichtwellenleiter zwischen den Trägerkörpern und den Abdeckungen möglich. Nach der Aushärtung wird der Grundkörper quer zum Verlauf der Lichtwellenleiter in zwei gleiche Trägerkörper getrennt. Die Stirnflächen werden geschliffen und poliert, unter Umständen ist auch ein Trennschleifen wünschenswert, bei dem beide Vorgänge miteinander verbunden werden. Auf diese Weise erhält man zwei als Steckerteiler anzusehende Trägerkörper. Durch Versatz der beiden Trägerkörper und Zusammenführung entlang einer gemeinsamen Bezugslinie können nun die ankommenden mit den abgehenden Lichtwellenleiterenden gekoppelt werden, da sie sich nun gegenüber stehen.

Die Erfindung wird nun anhand von zwei Figuren näher erläutert, wobei

Figur 1 die Anordnung der Lichtwellenleiter vor dem Trennen des Grundkörpers darstellt.

Figur 2 zeigt die beiden voneinander getrennten Trägerkörper im Kopplungszustand, das heißt, sie sind in Querrichtung um den Durchmesser eines Lichtwellenleiters gegeneinander versetzt.

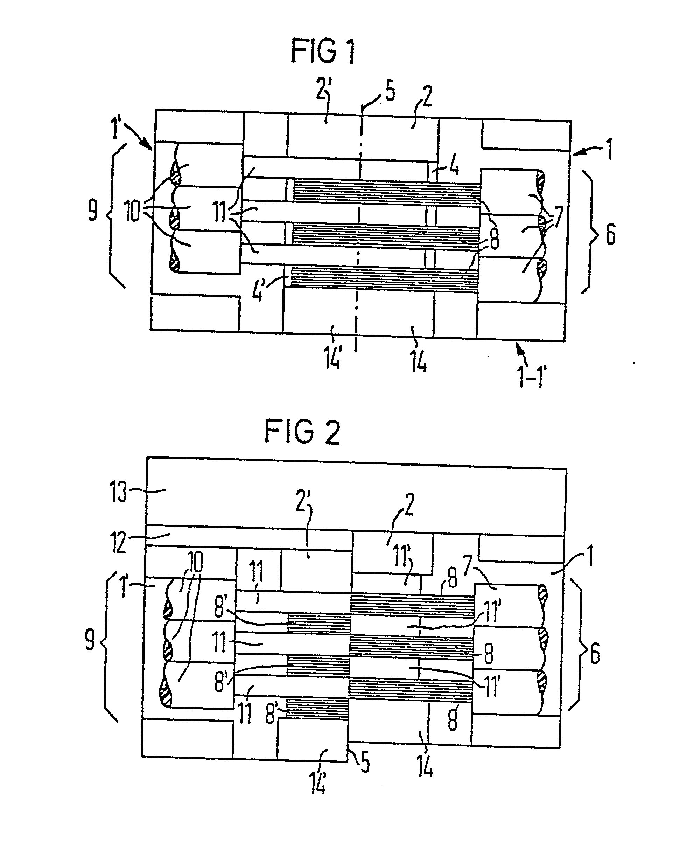

Die Anordnung in Figur 1 zeigt den Grundkörper 1-1' des Verbinders für eine Vielzahl von Lichtwellenleitern in seiner Montageform, das heißt, er ist noch nicht in seine zwei Trägerkörper 1 bzw. 1' getrennt, die gewissermaßen als Steckerteile anzusehen sind. Von beiden Seiten her werden auf die polierte Oberfläche des Grundkörpers 1-1' die Lichtwellenleiter 8 bzw 11 aus den miteinander zu verbindenden Gruppen bzw. Kabeln 6 bzw. 9 abwechselnd angeordnet und zwar so, daß die Enden der entlackten Lichtwellenleiter 8 bzw. 11 in einem mittleren Überlappungsbereich 4-4', in dem später die Trennung vorgenommen wird, nebeneinander zu liegen kommen. Die von rechts eingeführten Lichtwellenleiter 8 wurden in den Figuren zeichnerisch hervorgehoben, um das Abwechseln mit den von links eingeführten Lichtwellenleitern 11 besser zu verdeutlichen. Diese blanken, entlackten Lichtwellenleiter 8 gehören beispielsweise einer Gruppe oder einem Kabel 6 an, während die Lichtwellenleiter 11 einer Gruppe 9 zuzurechnen sind. Diese Lichtwellenleiter 8 bzw. 11 sind nur in dem kurzen mittleren Überlappungsbereich 4-4' entlackt. Bei der Montage werden nun die Lichtwellenleiter 8 und 11 abwechselnd aufgelegt und gegen einen Anschlag 2-2' gepreßt. Das Anpressen erfolgt mit Hilfe eines zweiten Anschlages 14-14', zum Beispiel eines Metallstreifens von ca. 100 µm Dicke und liegt damit unter dem Durchmesserbereich der Lichtwellenleiter. Damit kann er unter die Abdeckung der Lichtwellenleiter, die hier einfachheitshalber nicht gezeigt ist, eingeschoben werden. Die Abdeckung verhindert das Ausschnappen der bereits eingelegten Lichtwellenleiter. Die günstigsten Verhältnisse für eine derartige Verbindung ergeben sich jedoch bei Lichtwellenleitern, deren Durchmesser unbeschichtet halb so groß sind wie im beschichteten Bereich, da sich dann ein lückenloses Aneinanderfügen im unbeschichteten wie im beschichteten Bereich ergibt. Nach dem Einbringen und schließlich Aushärten eines geeigneten Klebers in der Parallelanordnung der Lichtwellenleiter 8 - 11 wird der Grundkörper 1-1' entlang der strichpunktiert gezeichneten Linie 5, den späteren Stirnflächen 5, in zwei sogenannte Trägerkörper 1 bzw. 1' getrennt. Ein solcher Trägerkörper, hier zum Beispiel 1', erhält nun ein seitliches Distanzstück 12, das in seiner Breite genau dem Durchmesser eines Lichtwellenleiters entspricht, so daß sich dann bei erneutem Zusammenbringen der Trägerkörper 1 und 1' entlang einer gemeinsamen Bezugslinie eines Führungskörpers 13 ein gegenseitiger Versatz der Lichtwellenleiter 8 und 11 um genau einen Lichtwellenleiter ergibt. Damit stehen sich jetzt die zu verbindenden Lichtwellenleiter 8-11 genau gegenüber und der Versatzfehler ist dabei äußerst gering. Diese Verhältnisse werden in der Figur 2 dargestellt, wobei in vereinfachter Weise der Führungskörper 13 als Leiste dargestellt ist. Das Distanzstück 12 kann dabei entweder wie bereits beschrieben, am Trägerkörper 1' oder auch entlang der Bezugslinie des Führungskörpers 13 angebracht werden. In jedem Fäll findet der gegenseitige Versatz statt. Die Trennung der beiden Trägerkörper 1 und 1' und damit auch der beiden Lichtwellenleitersysteme, das heißt die einmal ermittelten Dämpfungswerte sind für jeden Steckvorgang wieder reproduzierbar. Die zwischen den zu verbindenden Lichtwellenleitern 8 und 11 liegenden Endabschnitte 8' bzw. 11' dienen nicht mehr der Informationsübermittlung; sie verbessern jedoch die Nebensprechdämpfung der benachbart liegenden Lichtwellenleiter.

Die Trägerkörper für die Lichtwellenleiter können auch zylindrisch ausgebildet sein, wobei die Lichtwellenleiter dann auf der Außenfläche der zylindrischen Trägerkörper angeordnet sind. Bei zylindrischen Hohlkörpern als Trägerkörper können die Lichtwellenleiter auch auf deren Innenflächen angeordnet werden. Eine entsprechende Führung, zum Beispiel als Nut und Feder ausgebildet, gewährleistet dabei die erforderliche Zuordnung. Die weiteren Probleme werden wie bei der ebenen Ausführung gelöst.

**Patentansprüche:**

1. Verfahren zum paarweisen Verbinden einer Vielzahl von Lichtwellenleitern, die in Parallelanordnung auf einem Grundkörper angeordnet werden, der quer zum Verlauf der darauf angeordneten Lichtwellenleiter unter Bildung zweier Trägerkörper durchgetrennt wird, wobei die Lichtwellenleiter an ihren in der Trennstelle liegenden Stirnflächen poliert werden, dadurch gekennzeichnet, daß die Vielzahl der Lichtwellenleiter (8, 11) aus mindestens zwei verschiedenen zu verbindenden Gruppen (6, 9) stammen und abwechselnd parallel nebeneinanderliegend auf dem Grundkörper (1-1') angeordnet werden, so daß nach der Trennung des Grundkörpers (1-1') auf jedem Trägerkörper (1, 1') jeweils ein Lichtwellenleiter (8 bzw. 11) der einen Gruppe (6 bzw. 9) mit einem Endabschnitt (8' bzw. 9') eines Lichtwellenleiters (11 bzw. 8) der zweiten Gruppe (9 bzw. 6) abwechselt, daß weiterhin die Parallelanordnung der Lichtwellenleiter (11) des einen Trägerkörpers (1') quer zum Parallelverlauf der Lichtwellenleiter um den Durchmesser eines Lichtwellenleiters gegenüber der Parallelanordnung der Lichtwellenleiter (8) des anderen Trägerkörpers (1) durch ein Distanzstück (12) versetzt wird, und daß beide Trägerkörper (1, 1') entlang einer Bezugslinie eines gemeinsamen Führungskörpers (13) auf Stoß ihrer Stirnflächen (5) gebracht werden.

2. Verfahren nach Anspruch 1, dadurch gekennzeichnet, daß die Lichtwellenleiter (8, 11) gegen einen seitlichen Anschlag (2-2') gepreßt werden.

3. Verfahren nach Anspruch 1 oder 2, dadurch gekennzeichnet, daß die Lichtwellenleiter (8, 11) auf dem Grundkörper (1-1') verklebt werden.

4. Verfahren nach Anspruch 1 oder 2, dadurch gekennzeichnet, daß die Lichtwellenleiter (8, 11) auf dem Grundkörper (1-1') mechanisch eingespannt werden.

5. Verfahren nach einem der vorhergehenden Ansprüche, dadurch gekennzeichnet, daß die Trägerkörper (1, 1') mit einer Abdeckung für die verklebten Lichtwellenleiter (8, 11) versehen werden.

6. Verfahren nach Anspruch 4, dadurch gekennzeichnet, daß Polsterstreifen quer zur Parallelanordnung der Lichtwellenleiter (8, 11) auf die Abdeckungen oder Trägerkörper (1, 1') aufgebracht werden.

7. Verfahren nach Anspruch 4, dadurch gekennzeichnet, daß die Abdeckung mit dem Anschlag (2-2') verbunden und auf die eingespannten Lichtwellenleiter (8, 11) aufgesetzt wird.

8. Verfahren nach einem der vorhergehenden Ansprüche, dadurch gekennzeichnet, daß bei Verwendung von zylindrisch ausgebildeten Trägerkörpern die Lichtwellenleiter auf der Außenfläche desselben oder bei Verwendung von zylindrischen Hohlkörpern auf der Innenfläche der Bohrung desselben angeordnet werden.

**Claims:**

1. A method of connecting in pairs a plurality of light waveguides arranged in a parallel arrangement on a base body divided transversely to the course of the light waveguides arranged thereon to form two supporting bodies, where the light waveguides have polished end faces arranged at the separating point, characterised in that the plurality of the light waveguides (8, 11) emanate from at least two different groups (6, 9), which are to be connected, and are arranged on the base body (1-1') to be alternately parallel to one another, so that following separation of the base body (1-1'), on each supporting body (1,1') a light waveguide (8 or 11) of the one group (6 or 9) alternates with an end section (8' or 9') of a light waveguide (11 or 8) of the second group (9 or 6), that furthermore the parallel arrangement of the light waveguides (11) of the one supporting body (1') is displaced by a distance piece (12) relative to the parallel arrangement of the light waveguide (8) of the other supporting body (1) by the diameter of a light waveguide transversely to the parallel course of the light waveguide, and that both supporting bodies (1, 1') are brought to butt against one another with their end faces (5) along a reference line of a common guide body (13).

2. A method as claimed in Claim 1, characterised in that the light waveguides (8, 11) are pressed against a lateral stop (2-2').

3. A method as claimed in Claim 1 or 2, characterised in that the light waveguides (8, 11) are connected on the fundamental body (1-1') by adhesion.

4. A method as claimed in Claim 1 or 2, characterised in that the light waveguides (8, 11) are mechanically clamped on the fundamental body (1-1').

5. A method as claimed in one of the preceding

Claims, <u>characterised in that</u> the supporting bodies (1, 1') are provided with a covering for the light waveguides (8, 11) secured by adhesion.

6. A method as claimed in Claim 4, <u>characterised in that</u> the padding strips are applied to the covers or supporting bodies (1,1') transversely to the parallel arrangement of the light waveguides (8, 11).

7. A method as claimed in Claim 4, <u>characterised in that</u> the cover is connected to the stop (2-2') and placed onto the clamped light waveguides (8,11).

8. A method as claimed in one of the preceding Claims, <u>characterised in that</u> when using cylindrical supporting bodies the light waveguides are arranged on the outer surface thereof or when using cylindrical hollow bodies they are arranged on the inner surface of the bore thereof.

## Revendications

1. Procédé pour raccorder par couples une multiplicité de guides d'ondes optiques, que l'on installe selon une disposition parallèle sur un corps de base qu'on subdivise, transversalement par rapport à la direction des guides d'ondes optiques, disposés sur ce corps, moyennant la formation de deux corps de support, les guides d'ondes optiques étant polis au niveau de leurs surfaces frontales situées dans la zone de séparation, caractérisé par le fait que la multiplicité des guides d'ondes optiques (8, 11) proviennent d'au moins deux groupes différents (6, 9) devant être raccordés, et qu'on les dispose en alternance, parallèlement les uns à côté des autres, sur le corps de base (1-1') de telle sorte qu'après la subdivision du corps de base (1-1'), sur chaque corps de support (1, 1'), respectivement un guide d'ondes optiques (8 ou 11) d'un groupe (6 ou 9) alterne avec une section d'extrémité (8' ou 9') d'un guide d'ondes optiques (11 ou 8) du second groupe (9 ou 6), qu'en outre on décale le montage en parallèle des guides d'ondes optiques (11) d'un corps de support (1'), transversalement par rapport à la disposition parallèle des guides d'ondes optiques, sur une distance égale au diamètre d'un guide d'ondes optiques, par rapport à l'ensemble en parallèle des guides d'ondes optiques (8) de l'autre corps de support (1), au moyen d'une entretoise et qu'on amène les deux corps de support (1, 1') en aboutement par leurs faces frontales (5), le long d'une ligne de référence d'un corps de guidage commun (13).

2. Procédé suivant la revendication 1, caractérisé par le fait que l'on comprime les guides d'ondes optiques (8, 11) contre une butée latérale (2-2').

3. Procédé suivant la revendication 1 ou 2, caractérisé par le fait qu'on colle les guides d'ondes optiques (8, 11) sur le corps de base (1-1,).

4. Procédé suivant la revendication 1 ou 2, caractérisé par le fait qu'on serre mécaniquement les guides d'ondes optiques (8, 11) sur le corps de base (1-1,).

5. Procédé suivant l'une des revendications précédentes, caractérisé par le fait que l'on équipe les corps de support (1, 1') d'un revêtement pour les guides d'ondes optiques (8, 11) collés.

6. Procédé suivant la revendication 4, caractérisé par le fait que l'on met en place des bandes de rembourrage transversalement par rapport à la disposition en parallèle des guides d'ondes optiques (8, 11) sur les revêtements ou sur les corps de support (1, 1').

7. Procédé suivant la revendication 4, caractérisé par le fait que l'on relie le revêtement à la butée (2-2') et qu'on met en place les guides d'ondes optiques (8, 11) serrés.

8. Procédé suivant l'une des revendications précédentes, caractérisé par le fait que dans la cas de l'utilisation de corps de support de forme cylindrique, on dispose les guides d'ondes optiques sur la surface extérieure de ces corps ou que, dans le cas de l'utilisation des corps creux cylindriques, on dispose les guides d'ondes optiques sur la surface intérieure du perçage de ces corps.

## FIG 1

## FIG 2